# EUROPEAN PATENT SPECIFICATION

(11) **EP 1 797 485 B1**
(45) Date of publication and mention of the grant of the patent: **05.03.2014**
(21) Application number: 05802225.2
(22) Date of filing: 29.09.2005
(51) Int. Cl.: G05B 19/042, G08C 17/02

(54) **DOMOTIQUE SYSTEM PROVIDED WITH CENTRALIZED CONTROLLING AND MANAGING HARDWARE AND SOFTWARE FOR REMOTE MANAGEMENT OF DOMESTIC APPLIANCES, APPARATUSES, INSTALLATIONS, DEVICES AND MACHINES EXISTING IN A HOUSE**
HAUSAUTOMATISIERUNGSSYSTEM MIT ZENTRALER HARDWARE UND SOFTWARE ZUR FERNSTEUERUNG VON HAUSHALTSGERÄTEN, APPARATEN, ANLAGEN, VORRICHTUNGEN UND MASCHINEN IN EINEM HAUS
SYSTEME DOMOTIQUE EQUIPE D'UN MATERIEL ET D'UN LOGICIEL DE COMMANDE ET DE GESTION CENTRALISEES POUR UNE GESTION A DISTANCE D'APPAREILS, D'INSTALLATIONS, DE DISPOSITIFS ET DE MACHINES DOMESTIQUES PRESENTS DANS UNE MAISON

(30) Priority: 29.09.2004 IT BA20040042
(43) Date of publication of application: 20.06.2007
(73) Proprietor: CUPERSAFETY S.r.l., 70014 Conversano (BA) (IT)
(72) Inventor: CONSORTE, Giuseppe, I-70014 Conversano (BA) (IT); D'ALESSANDRO, Leonardo, I-70014 Conversano (BA) (IT); SACCHETTI, Antonio, I-70014 Conversano (BA) (IT)
(74) Representative: Sarpi, Maurizio
(86) International application number: PCT/IT2005/000562
(87) International publication number: WO 2006/035472

(56) References cited:
- DE-A1- 10 115 720
- US-A- 5 802 467
- US-A1- 2003 156 053
- PATENT ABSTRACTS OF JAPAN vol. 2002, no. 07, 3 July 2002 (2002-07-03) & JP 2002 091842 A (CASIO COMPUT CO LTD), 29 March 2002 (2002-03-29)

## Description

The present invention relates to a novel domotic system provided with centralized controlling and managing hardware and software for the remote control of household appliances, apparatuses, installations, devices and machines existing in a dwelling-house.

Presently produced household appliances such as refrigerators, boilers, washing machines, dishwashers, ovens, air-conditioners, etc. are equipped with mechanical and electronic devices provided with a drive and control software which is installed upon manufacturing directly by the constructor inside the appliances so that it can be interfaced with centralized remote control systems.

Domotic systems and agencies have been recently developed with the aim at the remote control of a plurality of domestic appliances, apparatuses, installations, devices and machines existing in a dwelling-house.

A practical example was given by Sun Microsystems in 1999 using the Jini technology which is based upon the Java language and TCP-IP (communication protocols via Internet) and allows objects different from one another such as a washing machine, a printer, a hard disk to be connected by using net protocols over one so-called cooperative net where there is no central service-providing unit but everybody takes part with its own capability in helping everyone is needing service. These services are dynamical both by number and type.

A domotic agency is a recent development of the domotic systems and includes a plurality of such systems allowing all those functions of a dwelling-house where a machine can emulate the man to be managed as well as all home devices to be remote monitored and controlled by typical communication means that are widespread today such as mobile phone, electronic mail (e-mail), and web browser. The emulation takes place by inference providing a sole central supervisor agent. The inferential motor usually consists of a software packet.

Some approaches to the problem of creating a domestic net with remote controlled devices are mentioned in the literature and exist on the market, however, such control keeps a low profile today. High-level control means such as conveyed-wave systems, for example a modulation of the electric current at 50-60 Hz to switch on/off devices from a central system, are known but rarely used nowadays.

Recently, other transmission means (telephone lines, radiofrequency, infrared) and their applications such as domestic net for data transfer, complex control means for single devices, voice control, power consumption control, direct connection to internet.

A the same time "smart" devices have been put on the market consisting of simple devices with newly added functionalities, e.g. an oven connected to internet to download recipes, a refrigerator that sends messages about what is missing, etc.

There are also little integrated systems having only one purpose, for example, the control of the home lights or the home alarm system.

The ways of integrating all systems in only one with the benefits involved have been investigated only for the last years.

However, except for single inventions and ad hoc embodiments there is still no system able to integrate in a flexible, dynamic manner all apparatuses, devices, and subsystems of a dwelling-house today even if Jini technology has recently solved the problem of the connection and communication between a plurality of different devices, thus becoming the standard system for the mutual communication and the starting point for the construction not only of a domotic system but a domotic agency.

DE10115720 discloses a method which involves maintaining peripheral device control information in a portable communications device and selectively transmitting the information to at least one peripheral device. The peripheral device is caused to respond to the peripheral device control information, which contains configuration information.

US2003156053 discloses an universal remote control apparatus that is programmable with software supplied by manufacturers of controllable devices so that a single remote control apparatus has a broad spectrum application capable of operating many different controllable devices. The remote control apparatus is based in a Personal Digital Assistant (PDA) having sufficient memory to store the requisite software from a multitude of controllable devices and is operable to send or receive signals to the controllable devices by radio signal or by infra red beam. The remote control apparatus can be coupled to a personal computer to download the requisite software into the memory of the PDA, which can come via software supplied with the controllable device or by accessing the manufacturer's web site and downloading the necessary software therefrom.; The display screen of the PDA can then be customized to replicate any control functions with a touch screen actuation control buttons.

JP2002091842 discloses a telephone set which performs radio communication with a plurality of equipment via a short distance communication part and acquires product information data of such equipment. Corresponding to a request from a product managing server, the telephone set transmits information on the telephone set itself and on the product equipment as well as user information via a net communication part to the product managing server. The product managing server stores the managing information of various kinds of products and compares the product information transmitted from the telephone set with the managing information and when there is a relevant product, corresponding software is transmitted via a net communication part to the telephone set. Updating the version of the corresponding software under certain conditions, the relevant equipment 30 automatically repairs the trouble of an operation defect. According to JP2002091842, the technical solution therein disclosed in intended to provide an equipment managing server, electronic equipment and an equipment managing system capable of repairing software trouble of a household electric appliances without the help of a user or a serviceman.

US5802467 discloses an interactive microprocessor based wireless communication device includes sound and data transceivers, signal detection and coupling devices, signal conversion device, voice recording, playback and storage device, voice activated device, display device, touch screen or similar device, sensors, frequency generation device, sound detection and reproduction devices and power source to concurrently perform generalized two way wireless communications, command, control and sensing functions utilizing radio and infra-red frequency communication links. A microprocessor receives signals from the touch screen and generates a digital data, command/or control signal for transmission to external devices such as home appliances and remote sensors. The microprocessor also responds to voice signal commands received via microphone and a voice processor.; The microprocessor uses this signal to generate data, command/or control signals for transmission to external devices such as telephone, paging and intercom systems. Sound signals may be stored in a voice recorder and playback IC for subsequent message processing and coupling to a transceiver and/or a speaker. Telephone ringer signals are generated by the microprocessor and are coupled to a ringer for audio output. In response to certain commands, the wireless communication device establishes a communication link with external devices using radio frequency or infra-red frequency transmission and/or reception. Sensor signals are created by sensors that can detect physical differential changes and that can convert the changes into measurements. These signals are coupled to the microprocessor for further processing, display and/or transmission. ,

Cited prior art documents do not disclose the combination of features according to claim 1. More particularly none of them discloses an inverter which can communicate consumption data with the docking station which enable electric energy consumption management.

A drawback of the present domotic systems which is certainly not a minor problem with respect to the above-mentioned system mainly depends on that they have an additional considerable cost which is far greater with respect to the cost of the household appliances and then the present domotic systems have the unquestionable limitation that they are not easily within the reach to all family incomes because of their cost.

The main object of the present invention is to fully overcome the limitations and the problems of the present domotic systems by providing a novel centralized domotic system able to remote control and manage household appliances, apparatuses, installations, devices, machines, etc. existing in a dwelling-house, thus further allowing the cost of the whole domotic system to be minimized so that the latter can be within the reach also to less well-off families.

These objects are achieved by providing a domotic system according to the subject-matter of claim 1.

These objects and the relative advantages as well as features of the system according to the present invention will result more clearly from the following description of a preferred exemplary, not limiting embodiment with particular reference to the accompanying drawings, in which:

Fig. 1 is a schematic view of a domotic agency 7 of the known type which is useful to a better understanding of the specific field of application of the invention, in which the domotic system of the known type 1A is designated by dashed lines;

Figure 2 is a schematic view of a preferred embodiment of a domotic system 1B according to the invention essentially consisting of a remote logic unit 2 and a plurality of household appliances, thermostats, safety systems, lights, apparatuses, machines, installations, etc. 4.1-4.2-4.3-...-4.n, interacting via radio with the remote logic unit 2 during the ordinary management of the dwelling-house;

Fig. 3 is a schematic view of a preferred, not limiting solution of a possible embodiment of the remote logic unit 2 of the domotic system 1B of fig. 2.

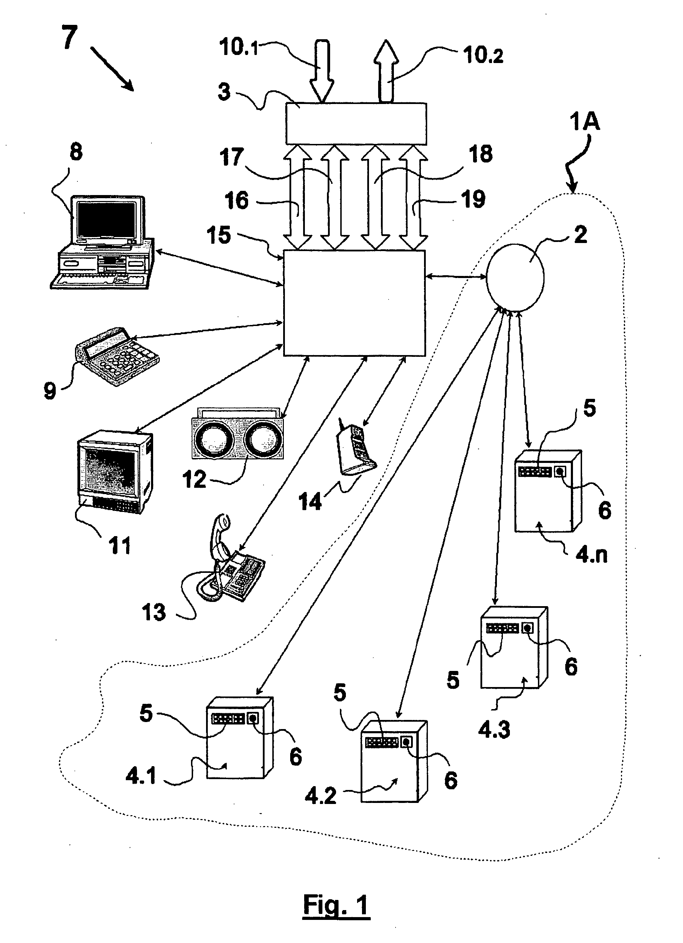

With reference to figure 1 showing an example of the prior art, a domotic agency 7 consists preferably of a central connection unit 15 to which there are connected:
- one or more PCs (personal computers) 8 by data net for PC,
- one or more PDAs (personal digital assistants) 9 such as palmar computers by wireless data net such as radio or light waves or more generally electromagnetic waves,
- one or more television sets 11 and/or stereo equipments 12 by distribution and entertainment nets,
- one or more fixed 13 and/or mobile 14 telephone apparatuses operating via cable and via radio, respectively,
- al last, a remote logic unit 2 of a domotic system 1A, which logic unit 2 is able to connect domotic system 1A to central connection unit 15 and through the latter to a plurality of household appliances, thermostats, safety systems, lights, apparatuses, machines, installations, etc. 4.1...4.n, all of them provided with specific man-machine interface components both of electronic kind 5 such as display, monitor, LEDs, etc. and mechanical kind 6 such as knobs, buttons, levers, etc.

Furthermore, a plurality of communication means such as a power line modem connected via electric system 16, a wireless, radio or light, transmitter 17, one or more telephone lines 18, a LAN, Ethernet or intranet 19 (preferably of class 5), carry out broadband services by input 10.1 and output 10.2 data transmission through a network gateway 3 connected through said communication means 16-19 to central connection unit 15.

Said known domotic system 1A has been shown enclosed by a dashed line to better emphasize the specific field of application of the present invention inside the whole assembly of fig. 1 shown as a technically known illustrative example, the so-called domotic agency 7.

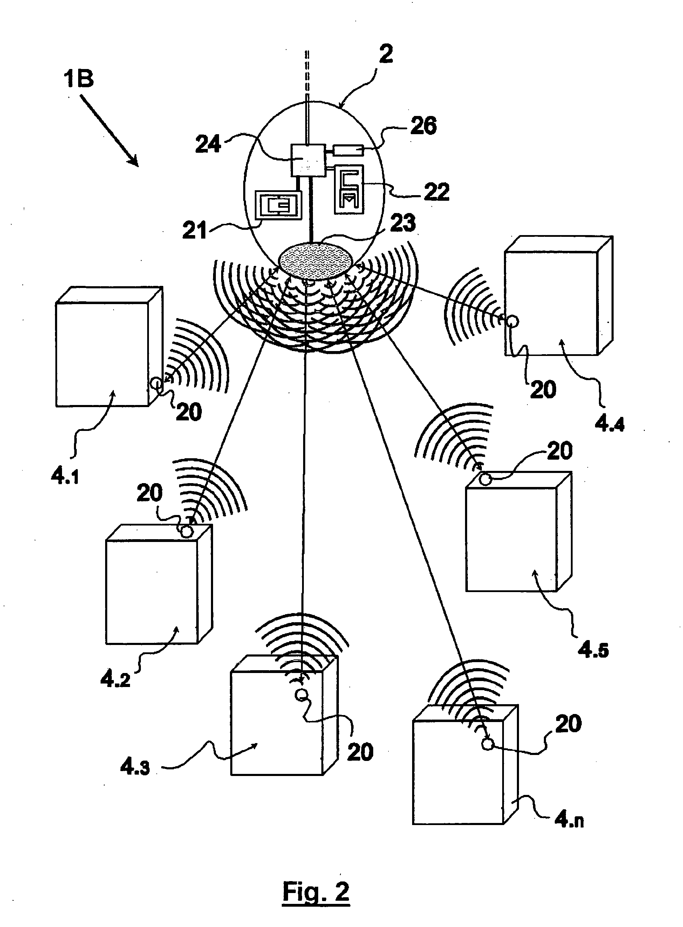

Next fig. 2 shows a diagram of a preferred, not limiting embodiment of a domotic system 1B according to the invention.

Domotic system 1B shown in fig. 2 is similar at first sight to the known domotic system 1A shown in fig. 1 as it like the latter consists essentially of a remote logic unit 2 installed near the controlled and managed apparatuses and/or installations 4.1...4.n for data exchange.

Said apparatuses and/or installations to be controlled and managed consist for example of a plurality of household appliances, thermostats, safety systems, lights, apparatuses, machines, installations, etc. According to a first peculiar feature of the finding said apparatuses and/or installations to be controlled and managed 4.1...4.n, are provided each with a respective radio transceiver 20 by which they are remote driven, controlled and managed from said remote logic unit 2.

A second peculiar feature of the present invention consists in that said apparatuses to be controlled and managed 4.1...4.n are all lacking in their specific man-machine interface components both of electronic 5 (such as display, monitor, LEDs, etc.) and/or mechanical 6 (such as knobs, buttons, levers, etc.) kinds.

Said radio transceivers 20 installed on board of each apparatus are electronic devices with a very low cost preferably of the SRD (Short Range Device) type as they have a low transmission range with the consequent low market cost.

Another feature of domotic system 1B disclosed is that said remote logic unit 2 which drives, controls and manages said plurality of apparatuses 4.1...4.n is portable and also provided with a specific centralized man-machine interface electronics 21 and mechanics 22 which is of simple and easy use and economic as well.

A further feature of domotic system 1B according to the present invention is that said plurality of apparatuses 4.1...4.n provided with their own radio transceiver 20 are in remote, interactive communication with portable remote logic unit 2 and through a docking station 25 to the respective manufacturing companies.

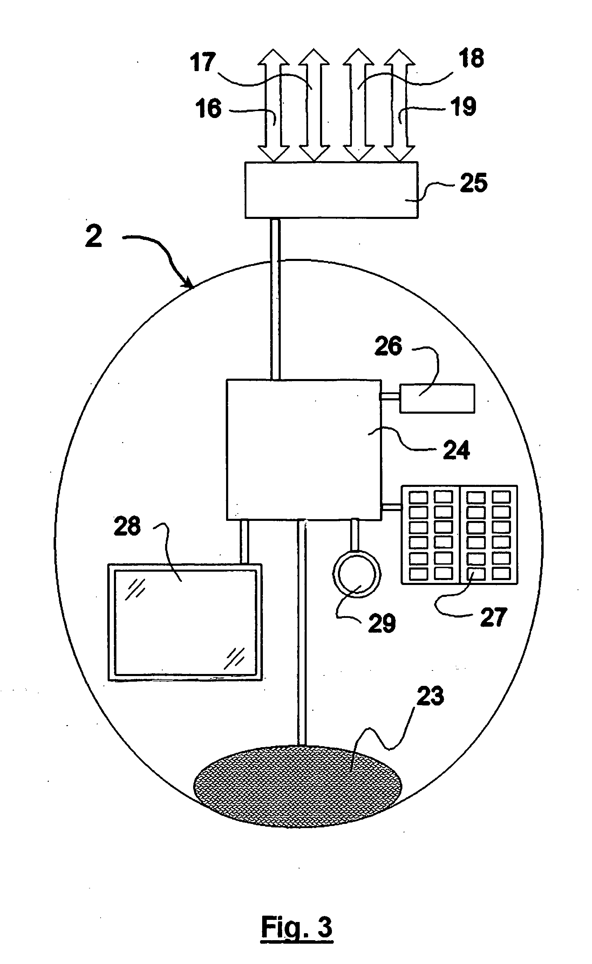

In fact, fig. 3 shows a schematic diagram of a preferred embodiment of remote logic unit 2 according to the invention consisting of a particular exemplary embodiment of the main components.

In this embodiment said portable remote logic drive, control and management unit 2 includes essentially:
- a central radio transceiver 23,
- a microcontroller 24,
- a storage battery 26,
- a specific man-machine interface component set consisting for example of a push-button panel 27, a video display 28 for displaying collected and transmitted data, and a buzzer 29 for signalling data input at any time.

In particular, each apparatus 4.1...4.n communicates with said central radio transceiver 23 through respective radio transceiver 20 so that software updating can be received automatically from the respective manufacturing companies. The connection to the latter is performed by said docking station 25 which can be interfaced with remote logic unit 2 and is provided with a modem connected via electric system 16, and/or a wireless, radio or light, transmitter 17, and/or one or more telephone lines 18, and/or a LAN 19, i.e. Ethernet, intranet, Internet, preferably of class 5, or other equivalent means for input and output data transmission from logic unit 2.

Said central radio transceiver 23 interacts via radio with each apparatus 4.1...4.n transmitting and receiving control data of the latter as well as updating the software periodically and/or on demand by a direct connection to the manufacturing companies. Advantageously, the transmission/reception can be carried out, as already mentioned, by a plurality of known communication means 16-17-18-19 through said docking station 25.

Domotic system 1B according to the present invention is able to update continuously the firmware, i.e. the software installed by the manufacturing companies on board of their own apparatuses 4.1...4.n in a quick, safe manner without running the risk that the know-how of the manufacturing company can be revealed.

In other words, the disclosed domotic system 1B allows the manufacturers of household appliances to load and update software independently and remotely also in control logic unit or console 2 and to define the functions available in each household appliance without third parties interfere in console 2. This means that the intervention of third parties for the conversion of the graphical interfaces and the operations that can be controlled by display is not necessary because each manufacturer will have a general-purpose, standardized development environment which can be provided, for example, by a software loaded on the console of the so-called "virtual machine" type (e.g. Java).

In addition, the unquestionable advantage of the present invention consists in that the additional paltry cost of radio transceivers 20 to be installed on board of the single apparatuses 4.1...4.n adds to the considerable saving consisting of the removal of the interface electronics and mechanics which are now installed only in remote logic unit 2 driving, controlling and managing the whole domotic system 1B with a considerable reduction in cost allowing the invention to be within the reach to all families.

As can be appreciated, the advantages of the present invention consist above all of the provision of a simple domotic system 1B which is technically safe and can be implemented with a minimum final cost.

The domotic system disclosed has also the advantage of being useful not only for the final users but also for the manufacturing companies of the single household appliances, thermostats, safety systems, lights, apparatuses, machines, installations, etc.

The feasibility of the continuous software updating by the manufacturing companies will provide a base of household appliances always updated with new technologies with a number of self-evident advantages such as:
- the protection of the environment as the household appliances thus conceived will allow water and cleansing agents to be used with optimum efficiency,
- a better use of the power as the consumption can be optimised as far as the effective use of the household appliance is concerned,
- lower management cost for the final user due to a lower power and primary-product consumption, thus producing lower cost associated to the management of the household appliances.

A further advantage of the whole system consists of a high rationalization of the maintenance: the control system is able to signalise the failures to the technical assistance centres or customer service in real time. Thus, the remote monitoring of the normal operation and use of a large number of household appliances will be possible with evident rationalization of the activity of the technical assistance centres.

Another advantage of the present invention is the conceiving of the domotic-system production cost minimization that can be obtained by a very easy technological method to be carried out by means of the simple innovations of the finding.

At last it should be appreciated that docking station 25, which is connected to remote logic unit 2 for the management of apparatuses, devices and installations 4.1...4.n existing in a dwelling-house, can be connected to a smart inverter of the known type associated to electric photovoltaic sources or other alternative power sources. Thus, docking station 25 receives data about consumptions from the inverter so that it can produce a signal causing the load to be switched off and/or carries out directly such an operation as a function of the parameters adjusted by the user.

In conclusion, it should be appreciated that the present invention provides that the manufacturing companies do not sell the household appliance to the user but only the service associated thereto: for example, in case of a washing machines, they sell only the wash. In these cases, the manufacturing company is not bound to install a counter in each household appliance to detect how many times the latter is used and/or by what program, the user just paying the service obtained by that household appliance only when and if he uses it. The use of the household appliances is controlled by remote unit or console 2 which is managed by the user.

It is self-evident that anyone skilled in the art can make a number of functionally equivalent modifications, adaptations, integrations, variations and replacements to the domotic system disclosed above by way of an illustrative, not limiting embodiment without departing from the scope of protection of the following claims.

## Claims

1. A domotic system (1B) for the centralized drive, control and management of domestic appliances, devices, apparatuses, installations (4.1...4.n) existing in a dwelling-house, consisting of a remote logic unit (2) of remote drive, control and management and a plurality of said apparatuses, devices and installations (4.1...4.n), wherein said apparatuses, devices and installations (4.1...4.n) are each provided with wireless communication means (20) by which they are remote by driven, controlled and managed by said remote logic unit (2) which is also provided with its own central wireless communication means (23), said domotic system being provided with a docking station (25) suitable to be connected to said remote logic unit (2), **characterized in that** said apparatuses, devices and installations (4.1...4.n) are all lacking in their man-machine interface components both of electronic kind (5) such as display, monitor, LEDs, and mechanical kind (6) such as knobs, buttons, levers; said docking station (25) communicates with a smart inverter of the known type associated to electric photovoltaic sources or other alternative power sources so that docking station (25) can receive data about consumptions from the smart inverter so that it can produce a signal causing the load to be switched off and carries out directly such an operation as a function of the parameters adjusted by the user.

2. The domotic system (1B) according to claim 1, **characterized in that** said wireless communication means consists of respective radio transceivers (20), and said central wireless communication means of said remote logic unit (2) consists of a central transceiver (23) able to communicate with each said transceiver (20).

3. The domotic system (1B) according to claim 2, **characterized in that** said transceivers (20) installed on board of each apparatus are electronic Short Range Devices.

4. The domotic system (1B) according to claim 1, **characterized in that** said remote logic unit (2) driving, controlling and managing said plurality of apparatuses (4.1...4.n) is provided with its own centralized man-machine interface means of electronic (21) and/or mechanical (22) kinds.

5. The domotic system (1B) according to claim 1, **characterized in that** said remote logic unit (2) is portable.

6. The domotic system (1B) according to claim 1, **characterized in that** said docking station (25) is able to communicate with the respective companies of manufacturing of apparatuses, devices, and installations (4.1...4.n), thus providing that the latter can exchange data with their own manufacturing companies through remote logic unit (2) and docking station (25).

7. The domotic system (1B) according to the preceding claim, **characterized in that** said remote logic unit (2) includes said docking station (25).

8. The domotic system (1B) according to claim 1, **characterized in that** said portable remote logic unit (2) for driving, controlling and managing apparatuses includes essentially:
- a central transceiver (23),
- a microcontroller (24),
- a storage battery (26),
- a specific man-machine interface component set consisting for example of a push-button panel (27), a video display (28) for displaying data collected and transmitted, and a buzzer (29) for signalling data input at any time.

9. The domotic system (1B) according to claim 5, **characterized in that** said remote logic unit (2) has the size of a manual remote control and is provided with an electronic (21) and mechanical (22) man-machine interface that can be used to manage the operations of all apparatuses, devices and installations (4.1...4.n).

10. A domotic agency (7) for driving, controlling and managing centrally apparatuses and installations (4.1...4.n) existing in a dwelling-house, **characterized in that** there is provided a plurality of domotic systems (1B) according to the preceding claims.

## Patentansprüche

1. Hausautomatisierungssystem (1B) zum zentralen Antrieb, Steuerung und Management von Haushaltsgeräten, -vorrichtungen, -apparaten, -installationen (4.1...4.n), welche in einem Wohnhaus existieren, bestehend aus einer Fernlogikeinheit (2) eines Fernantriebs, -steuerung und -managements und einer Mehrzahl der Apparate, Vorrichtungen und Installationen (4.1...4.n), wobei die Apparate, Vorrichtungen, Installationen (4.1...4.n) jeweils mit einer drahtlosen Kommunikationseinrichtung (20) versehen sind, durch die sie fernantreibbar, steuerbar und -managebar von der Fernlogikeinheit (2) sind, welche ebenfalls mit ihrer eigenen zentralen drahtlosen Kommunikationseinrichtung (23) versehen ist, wobei das Hausautomatisierungssystem mit einer Dockingstation (25) versehen ist, welche geeignet ist, mit der Fernlogikeinheit (2) verbunden zu werden,
**dadurch gekennzeichnet, dass** die Apparate, Vorrichtungen und Installationen (4.1...4-n) alle in ihren Maschinenschnittstellenkomponenten keine elektronische Art (5), wie z.B. eine Anzeige, ein Monitor, LEDs, und keine mechanische Art (6), wie z.B. Knöpfe, Tasten, Hebel, aufweisen, wobei die Dockingstation (25) mit einem smarten Inverter eines bekannten Typs, der elektrischen Fotovoltaikquellen oder anderen alternativen Leistungsquellen zugeordnet ist, kommuniziert, sodass die Dockingstation (25) Daten über Verbräuche von dem smarten Inverter empfangen kann, sodass sie ein Signal erzeugen kann, welches bewirkt, dass die Last ausgeschaltet wird und direkt solche eine Operation als eine Funktion von den Parametern ausführt, welche durch den Benutzer eingestellt sind.

2. Hausautomatisierungssystem (1B) nach Anspruch 1, **dadurch gekennzeichnet, dass** die drahtlose Kommunikationseinrichtung aus jeweiligen Radiotransceivern (20) besteht und dass die zentrale drahtlose Kommunikationseinrichtung der Fernlogikeinheit (2) aus einem zentralen Transceiver (23) besteht, welcher in der Lage ist, mit jedem der Transceiver (20) zu kommunizieren.

3. Hausautomatisierungssystem (1B) nach Anspruch 2, **dadurch gekennzeichnet, dass** die Transceiver (20), welche an Bord von jedem der Apparate installiert sind, elektronische Kurzreichweitenvorrichtungen sind.

4. Hausautomatisierungssystem (1B) nach Anspruch 1, **dadurch gekennzeichnet, dass** die Fernlogikeinheit (2), welche die Mehrzahl von Apparaten (4.1...4.n) antreibt, steuert und managt, mit ihrer eigenen zentralisierten Mensch-Maschinen-Schnittstelleneinrichtung elektronischer (21) und/oder mechanischer (22) Art versehen ist.

5. Hausautomatisierungssystem (1B) nach Anspruch 1, **dadurch gekennzeichnet, dass** die Fernlogikeinheit (2) tragbar ist.

6. Hausautomatisierungssystem (1B) nach Anspruch 1, **dadurch gekennzeichnet, dass** die Dockingstation (25) in der Lage ist, mit den jeweiligen Herstellerfirmen der Apparate, Vorrichtungen, Installationen (4.1...4.n) zu kommunizieren, um dafür zu sorgen, dass letztere Daten mit ihren eigenen Herstellungsfirmen über die Fernlogikeinheit (2) und die Dockingstation (25) austauschen kann.

7. Hausautomatisierungssystem (1B) nach dem vorhergehenden Anspruch,
**dadurch gekennzeichnet, dass** die Fernlogikeinheit (2) die Dockingstation (25) beinhaltet.

8. Hausautomatisierungssystem (1B) nach Anspruch 1, **dadurch gekennzeichnet, dass** die tragbare Fernlogikeinheit (2) zum Antreiben, Steuern und Managen der Apparate im Wesentlichen aufweist:
einen zentralen Transceiver (23),
einen Mikrocontroller (24),
eine Speicherbatterie (26),
ein spezifisches Mensch-Maschinen-Schnittstellen-Komponentenset bestehend beispielsweise aus einer Druckknopfkammer (27), eine Videoanzeige (28) zum Anzeigen von gesammelten und übertragenen Daten, und einem Summer (29) zum Signalisieren von Dateneingabe zu jeder Zeit.

9. Hausautomatisierungssystem (1B) nach Anspruch 5, **dadurch gekennzeichnet, dass** die Fernlogikeinheit (2) die Größe einer manuellen Fernsteuerung hat und mit einer elektronischen (21) und mechanischen (22) Mensch-Maschinen-Schnittstelle versehen ist, welche verwendbar ist, um die Operationen aller Apparate, Vorrichtungen, Installationen (4.1...4.n) zu managen.

10. Hausautomatisierungsagentur (7) zum Antreiben, Steuern und Managen von Apparaten und Installationen (4.1...4.n), welche in einem Wohnhaus existieren, in zentraler Weise, **dadurch gekennzeichnet, dass** eine Mehrzahl von Hausautomatisierungssystemen (1B) nach den vorhergehenden Ansprüchen vorgesehen ist.

## Revendications

1. Système domotique (1B) pour la commande, le contrôle et la gestion centralisés d'équipements, dispositifs, appareils, installations domestiques (4.1, ..., 4.n) présents dans une maison d'habitation, comprenant une unité logique à distance (2) de commande, contrôle et gestion à distance et une pluralité desdits appareils, dispositifs et installations (4.1, ..., 4.n), dans lequel lesdits appareils, dispositifs et installations (4.1, ..., 4.n) sont dotés chacun de moyens de communication sans fil (20) par lesquels ils sont commandés, contrôlés et gérés à distance par ladite unité logique à distance (2) qui est également dotée de ses propres moyens de communication sans fil centraux (23), ledit système domotique étant doté d'une station d'accueil (25) adaptée pour être connectée à ladite unité logique à distance (2), **caractérisé en ce que** lesdits appareils, dispositifs et installations (4.1, ..., 4.n) sont tous dépourvus de leurs composants d'interface homme-machine à la fois de type électronique (5), comme affichage, moniteur, DEL, et de type mécanique (6), comme des poignées, boutons, leviers ; ladite station d'accueil (25) communique avec un onduleur intelligent du type connu associé à des sources électriques photovoltaïques ou d'autres sources d'énergie alternatives de manière que la station d'accueil (25) puisse recevoir des données relatives à des consommations en provenance de l'onduleur intelligent de manière qu'elle puisse produire un signal pour forcer la charge à être commutée hors service et exécute directement un tel fonctionnement comme une fonction des paramètres réglés par l'utilisateur.

2. Système domotique (1B) selon la revendication 1, **caractérisé en ce que** lesdits moyens de communication sans fil comprennent des émetteurs-récepteurs radio respectifs (20) et lesdits moyens de communication sans fil centraux de ladite unité logique à distance (2) comprennent un émetteur-récepteur central (23) capable de communiquer avec chaque dit émetteur-récepteur (20).

3. Système domotique (1B) selon la revendication 2, **caractérisé en ce que** lesdits émetteurs-récepteurs (20) installés sur le tableau de chaque appareil sont des dispositifs électroniques à courte portée.

4. Système domotique (1B) selon la revendication 1, **caractérisé en ce que** ladite unité logique à distance (2) commandant, contrôlant et gérant ladite pluralité d'appareils (4.1, ..., 4.n) est dotée de ses propres moyens centralisés d'interface homme-machine de types électronique (21) et/ou mécanique (22).

5. Système domotique (1B) selon la revendication 1, **caractérisé en ce que** ladite unité logique à distance (2) est portable.

6. Système domotique (1B) selon la revendication 1, **caractérisé en ce que** ladite station d'accueil (25) est capable de communiquer avec les sociétés respectives de fabrication d'appareils, de dispositifs et d'installations (4.1, ..., 4.n), en permettant ainsi que ces derniers puissent échanger des données avec leurs propres sociétés de fabrication à travers l'unité logique à distance (2) et la station d'accueil (25).

7. Système domotique (1B) selon la revendication précédente, **caractérisé en ce que** ladite unité logique à distance (2) comprend ladite station d'accueil (25).

8. Système domotique (1B) selon la revendication 1, **caractérisé en ce que** ladite unité logique à distance portable (2) de commande, contrôle et gestion d'appareils comprend essentiellement :
- un émetteur-récepteur central (23),
- un microcontrôleur (24),
- une batterie d'accumulateur (26),
- un ensemble de composants d'interface homme-machine spécifique comprenant par exemple un tableau de commande (27), un affichage vidéo (28) pour visualiser des données recueillies et transmises, et un avertisseur acoustique (29) pour signaler des données saisies à n'importe quel instant.

9. Système domotique (1B) selon la revendication 5, **caractérisé en ce que** ladite unité logique à distance (2) a la taille d'une télécommande manuelle et est dotée d'une interface homme-machine électronique (21) et mécanique (22) qui peut être utilisée pour gérer les fonctionnement de tous les appareils, dispositifs et installations (4.1, ..., 4.n).

10. Agence domotique (7) pour commander, contrôler et gérer de manière centralisée des appareils et installations (4.1, ..., 4.n) présents dans une maison d'habitation, **caractérisée en ce qu'**il est prévu une pluralité de systèmes domotiques (1B) selon les revendications précédentes.
